# EUROPÄISCHE PATENTSCHRIFT

(11) **EP 2 834 576 B1**
(45) Veröffentlichungstag und Bekanntmachung des Hinweises auf die Patenterteilung: **22.06.2016**
(21) Anmeldenummer: 13718072.5
(22) Anmeldetag: 06.03.2013
(51) Int. Cl.: F24J 2/36, F24J 2/54, H01L 31/04, B64G 1/14, H02S 30/20

(54) **SOLARMODUL**
SOLAR MODULE
MODULE SOLAIRE

(30) Priorität: 02.04.2012 AT 501202012
(43) Veröffentlichungstag der Anmeldung: 11.02.2015
(73) Patentinhaber: Smart Flower Energy Technology GmbH, 7540 Güssing (AT)
(72) Erfinder: SWATEK, Alexander, A-7540 Güssing (AT); STÖGER, Elmar, A-2822 Bad Erlach (AT); HOFFMANN, Michael, A-7540 Güssing (AT); MATISOVITS, Peter, A-7535 St. Michael (AT)
(74) Vertreter: Weiser, Andreas
(86) Internationale Anmeldenummer: PCT/AT2013/050058
(87) Internationale Veröffentlichungsnummer: WO 2013/149278

(56) Entgegenhaltungen:
- AT-A4- 509 886
- US-A- 4 630 791

## Beschreibung

Die vorliegende Erfindung betrifft ein Solarmodul, mit zumindest einer Vielzahl von lamellenförmigen Solarpaneelen, die um eine gemeinsame Achse verschwenkbar an einem länglichen Träger gelagert und zwischen einer ersten Stellung, in der sie im wesentlichen deckungsgleich und parallel zum Träger übereinanderliegen, und einer zweiten Stellung, in der sie um die genannte Achse aufgefächert im wesentlichen nebeneinanderliegen, bewegbar sind, wobei der Träger aus einem Gehäuse, welches ihn mitsamt den Solarpaneelen in deren erster Stellung aufnimmt, ausschwenkbar ist.

Ein derartiges Solarmodul ist aus der AT 509 886 bzw. der WO 2012/000004 bekannt und besitzt ein einbaubares Gehäuse, aus dem ein Träger mit einem Solarpaneelfächer ausfahrbar ist. Das bekannte Solarpaneel ist besonders für den stationären Einsatz geeignet. AT 509 886 offenbart den Oberbegriff des Anspruchs 1.

Die Erfindung setzt sich zum Ziel, ein Solarmodul dieser Art speziell für den Transport und temporären Einsatz an wechselnden Einsatzorten weiterzuentwickeln.

Dieses Ziel wird mit einem Solarmodul der einleitend genannten Art erreicht, welches sich erfindungsgemäß dadurch auszeichnet, dass das Solarmodul zwei in der genannten Weise mit Solarpaneelen ausgestattete Träger der genannten Art aufweist, wobei die beiden Träger an den diametralen Längsenden eines langgestreckten Basisträgers schwenkbar angelenkt sind, welcher in dem Gehäuse um eine etwa vertikale Achse drehbar gelagert ist.

Auf diese Weise wird einerseits eine optimale Platzausnützung des Gehäuses im eingefalteten Zustand des Solarmoduls (Solarpaneele in erster Stellung, alle Träger eingeschwenkt) und andererseits eine maximale Sonnenlicht-Auffangfläche im ausgefalteten Zustand (Solarpaneele in zweiter Stellung, alle Träger ausgeschwenkt) erreicht: In der ausgefalteten Stellung gewährleistet der verdrehbare Basisträger, dass die aufgefächerten Solarpaneele auf die Sonne ausgerichtet und ihr vollflächig dargeboten werden können, ohne dass die beiden Solarpaneelfächer einander gegenseitig abschatten. In der eingefalteten Stellung eignet sich das Solarmodul der Erfindung aufgrund seines optimierten Platzbedarfs besonders für eine Containerisierung für den Transport.

In einer bevorzugten Ausgestaltung der Erfindung ist demzufolge das Gehäuse ein standardisierter Land-, See- oder Luftfracht-Container, insbesondere ein ISO-Container oder EN (Euronorm) Swap-Body. Dadurch kann das Solarmodul mit standardisierten Transportmitteln auf einfache und rasche Weise zur autarken Energieversorgung von Ausrüstung an temporären Einsatzorten verbracht werden, beispielsweise von Forschungsanlagen in entlegenen geographischen Gebieten, elektronischen Anlagen bei Veranstaltungen oder militärischer Ausrüstung im Feld.

Gemäß einer besonders vorteilhaften Ausführungsform der Erfindung liegt jeder Träger in seiner eingeschwenkten Stellung etwa parallel zum Basisträger und in seiner ausgeschwenkten Stellung in einem stumpfen Winkel zum Basisträger, bevorzugt etwa 120°. Dies maximiert die Größe der Solarpaneele, ohne dass gegenseitige Abschattungen entstehen.

Bevorzugt liegen die beiden Träger in der eingeschwenkten Stellung symmetrisch bezüglich der Drehachse des Basisträgers, wodurch Krag- und Windlasten im ausgefalteten Zustand symmetriert und dadurch minimiert werden können.

Gemäß einer bevorzugten Variante der Erfindung hat das Gehäuse die Form einer langgestreckten Schachtel mit einer öffenbaren Deckseite und zumindest mit zwei öffenbaren Längsseiten, welche im geöffneten Zustand das Verdrehen des Basisträgers gegenüber dem restlichem Gehäuse gestatten. In einer alternativen bevorzugten Variante hat das Gehäuse die Form einer langgestreckten Schachtel und ist in einen unteren Teil und einen oberen Teil geteilt, wobei der untere Teil die Drehlagerung für den Basisträger und der obere Teil den Basisträger aufnimmt, um das gemeinsame Verdrehen des oberen Teils und des Basisträgers gegenüber dem unteren Teil zu gestatten. Beide Varianten ergeben einen hervorragenden Schutz der Solarpaneele im eingefalteten Zustand und deren volle Bewegungsfreiheit im ausgefalteten Zustand des Solarmoduls.

Gemäß einem weiteren bevorzugten Merkmal der Erfindung kann der untere Teil des Gehäuses zumindest einen elektrischen Akkumulator für von den Solarpaneelen erzeugte Energie enthalten. Dadurch ergibt sich ein tiefer Schwerpunkt des Solarmoduls, welcher zur Aufnahme von Krag- und Windlasten im ausgefalteten Zustand von besonderem Vorteil ist.

Gemäß einer weiteren vorteilhaften Ausführungsform der Erfindung ist zumindest ein Solarpaneel auf seiner Rückseite mit einer beim Auffächern auf dem darunterliegenden Solarpaneel abgleitenden Kehrlippe ausgestattet, wie es an sich aus der genannten WO 2012/000004 bekannt ist. Auf diese Weise wird gleichsam ein selbstreinigendes Solarmodul geschaffen: Beim Auffächern - und ebenso bei der gegenteiligen Bewegung - reinigt die Kehrlippe des einen Solarpaneeles die Oberfläche des benachbarten Solarpaneeles von Staub, Schnee, Regen, Blättern usw., sodass eine optimale Leistungsfähigkeit der Solarpaneele auch bei wechselnden Witterungseinflüssen und im gesamten Jahresverlauf erhalten bleibt.

In jedem Fall ist es besonders günstig, wenn jeder Träger an seinem einen Ende einen Schwenkkopf zur Lagerung seiner Solarpaneele aufweist. Dadurch können die Solarpaneele in der aufgefächerten, zweiten Stellung noch besser auf die Sonne ausgerichtet werden. Bevorzugt werden der Basisträger und/oder die beiden Träger und/oder die Schwenkköpfe, falls solche vorhanden, mit einem sonnenstandgesteuerten Antrieb zur automatischen Sonnennachführung der Solarpaneele ausgestattet, um im Tages- und Jahresverlauf stets optimalen Wirkungsgrad zu erzielen.

Die Solarpaneele, ihre Träger und der Basisträger könnten grundsätzlich per Hand verschwenkt, ein- und aufgefächert und verdreht werden. Besonders vorteilhaft ist es, wenn die Solarpaneele, Träger und Basisträger mittels Elektroantrieben zwischen ihren Stellungen bewegbar sind, sodass der Betrieb des Solarmoduls automatisierbar ist. Die Solarpaneele können auf diese Weise z.B. bei ausreichendem Sonnenlicht und sicherer Witterung automatisch ausgefahren und aufgefächert und bei Dunkelheit oder schlechter Witterung automatisch eingefächert und das Gehäuse geschlossen werden.

Die Solarpaneele können grundsätzlich von jeder beliebigen in der Technik bekannten Art sein, welche eine Umwandlung von Sonnenlicht in ausnützbare Energie ermöglicht, beispielsweise mit in den Solarpaneelen zirkulierenden Wärmeübertragungsfluiden, welche vom Sonnenlicht erwärmt werden. Bevorzugt ist jedes Solarpaneel durch ein flächiges Array von photovoltaischen Solarzellen gebildet, um direkt elektrische Energie zu erzeugen. Dies erleichtert auch die Verschaltung der Solarpaneele untereinander und ihren Anschluß an den Träger bzw. den Schwenkkopf, weil hier lediglich elektrische Anschlüsse hergestellt werden müssen.

Die Erfindung wird nachstehend anhand von in den beigeschlossenen Zeichnungen dargestellten Ausführungsbeispielen näher erläutert. In den Zeichnungen zeigen:
die Fig. 1 - 4 Perspektivansichten des Solarmoduls der Erfindung in aufeinanderfolgenden Phasen des Ausfahrens der Träger, Auffächerns der Solarpaneele und Verdrehen des Basisträgers;
die Fig. 5 - 7 das Solarmodul der Fig. 1 - 4 im eingefalteten Transportzustand in teilweise aufgebrochener Rückansicht (Fig. 5), Draufsicht (Fig. 6) und Perspektivansicht von schräg vorne (Fig. 7);
Fig. 8 eine alternative Ausführungsform des Solarpaneels der Erfindung in einer Darstellung ähnlich Fig. 4;
Fig. 9 einen Schwenkkopf eines der Solarpaneel-Träger in einer Seitenansicht; und
Fig. 10 einen Schnitt durch zwei übereinanderliegende Solarpaneele zur Darstellung der Kehrlippe zwischen diesen.

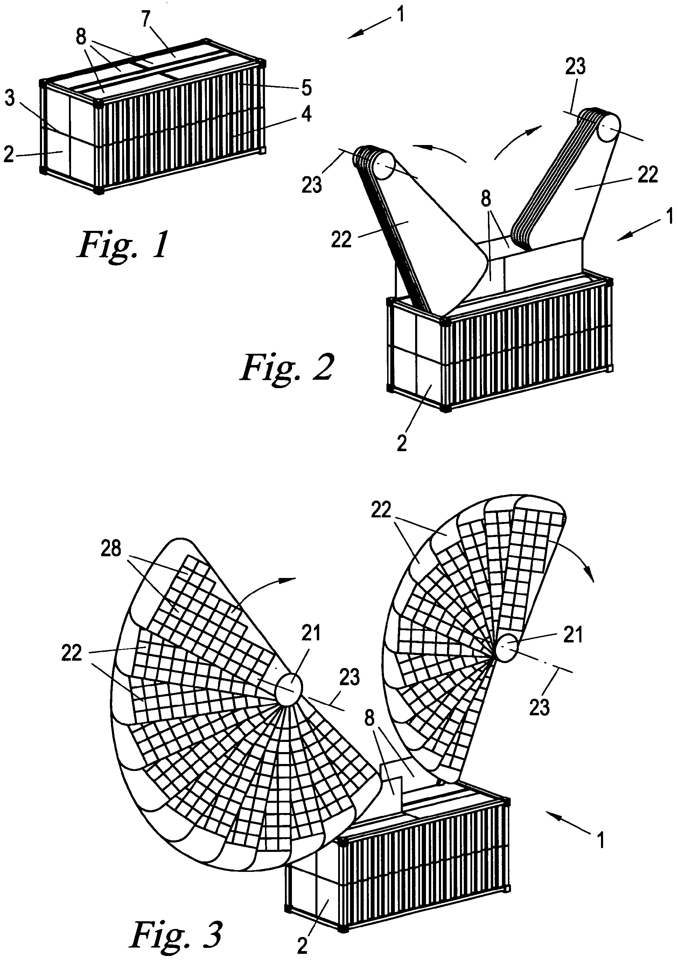

Gemäß den Fig. 1 - 7 umfasst ein Solarmodul 1 ein Gehäuse 2 von etwa parallelepipedischer Form, d.h. Schachtelform. Das Gehäuse 2 kann aus jedem beliebigen Material sein, beispielsweise Holz oder Kunststoff; bevorzugt ist das Gehäuse aus Metall, insbesondere Stahl. In einer beispielhaften Ausführungsform ist das Gehäuse 2 ein standardisierter Frachtcontainer für den Land-, See- oder Lufttransport, beispielsweise ein ISO-Container mit 20 Fuß Länge ("Twenty-Foot Equivalent Unit", TEU) oder 40 Fuß Länge ("Fourty-Foot Equivalent Unit", FEU) für den Bahn-, Schiffs- oder LKW-Transport; ein Euronorm (EN) Swap-Body für den LKW-Transport; ein Sattelauflieger für Sattelzugmaschinen; ein ICAO-Luftfrachtcontainer für den Lufttransport; od.dgl.

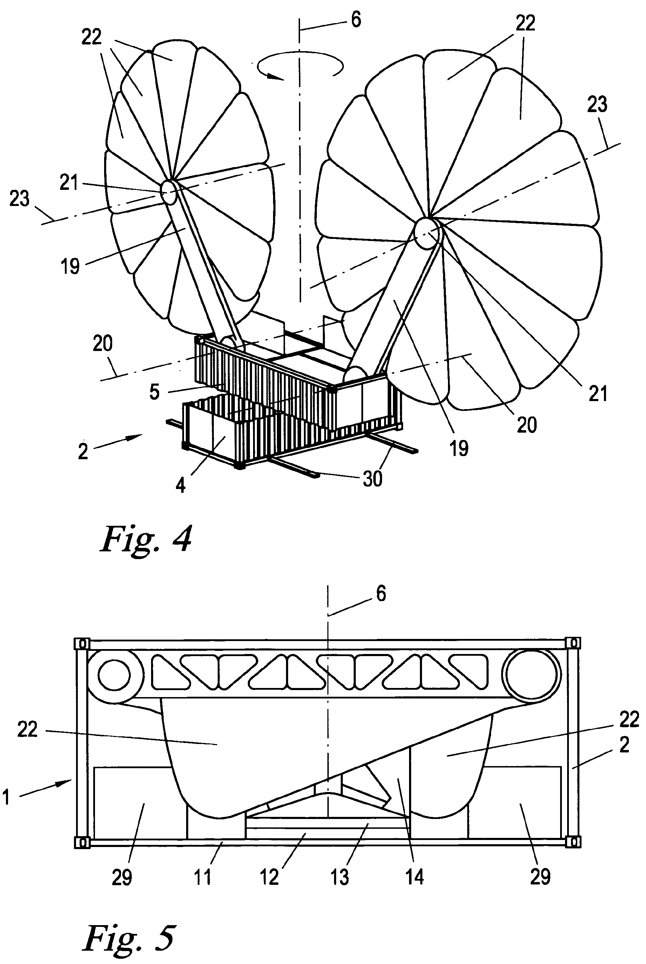

In dem gezeigten Bespiel ist das Gehäuse 2 gegenüber einem standardisierten ISO-Container insoweit modifiziert, als dass es entlang einer etwa horizontalen Teilungsebene 3 in einen unteren Teil 4 und einen oberen Teil 5 unterteilt ist, welche relativ zueinander um eine etwa vertikale Achse 6 (Fig. 4) verdrehbar sind, wie später noch ausführlicher erläutert wird. Ferner ist zumindest die Deckseite 7 des Gehäuses 2 öffenbar, sei es durch Abnehmen, Aufklappen oder Wegschieben eines Deckels (nicht gezeigt) oder, wie dargestellt, durch Aufklappen von vier Klappen 8.

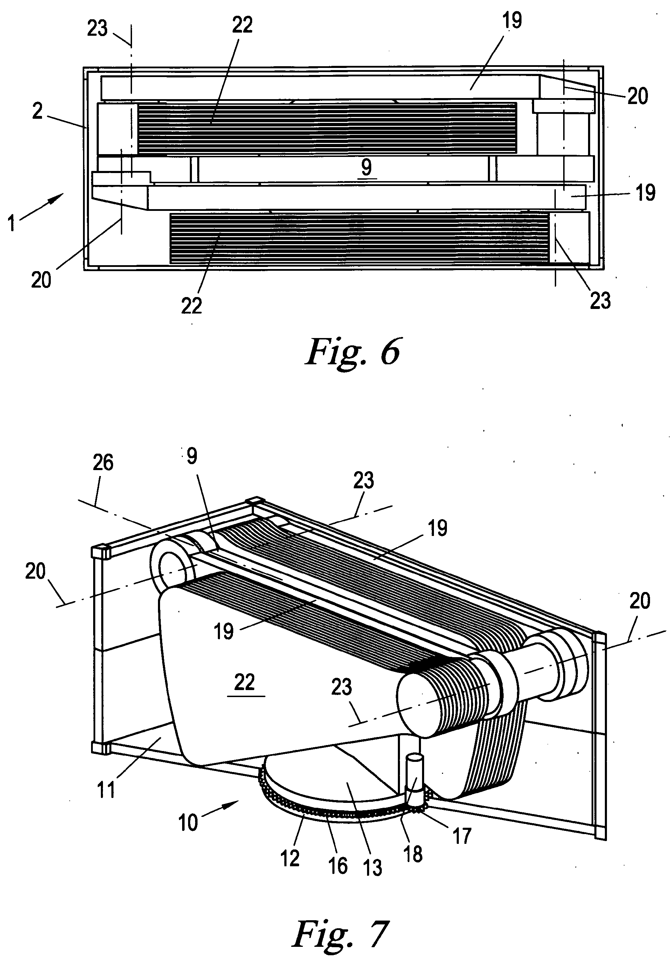

In der in den Fig. 1 und 5 - 7 gezeigten "eingefalteten" bzw. Transportstellung des Solarmoduls 1 nimmt das Gehäuse 2 einen etwa horizontal und in Längserstreckung des Gehäuses 2 mittig verlaufenden Basisträger 9 auf, der über eine Drehlagerung 10 am Boden 11 des Gehäuses 2 um die Achse 6 drehbar gelagert ist. Die Drehlagerung 10 ist beliebiger Art und beispielsweise ein Drehgestell, dessen fester Teil 12 mit dem Boden 11 verbunden ist und dessen drehender Teil 13 über eine Zwischenstütze 14 den Basisträger 9 trägt und damit auf die Höhe des oberen Teils 5 des Gehäuses 2 anhebt (Fig. 5). Dadurch können der obere Teil 5 des Gehäuses 2 und der Basisträger 9 gemeinsam gegenüber dem unteren Teil 4 des Gehäuses 2 um die Achse 6 verdreht werden (Fig. 4). Der drehende Teil 13 kann mit einem Zahnkranz 16 ausgestattet sein, in den ein Ritzel 17 eines E-lektroantriebs 18 eingreift, um den Basisträgers 9 und den oberen Gehäuseteil 5 zu verdrehen, siehe Fig. 7.

An den beiden diametralen Enden des Basisträgers 9 ist jeweils ein Träger 19 um eine etwa horizontale und normal zum Basisträger 9 verlaufende Achse 20 schwenkbar angelenkt. Die beiden Träger 19 besitzen etwa dieselbe Länge wie der Basisträger 9 und liegen in der eingefalteten Stellung des Solarmoduls 1 (Fig. 1 und 5 - 7) etwa parallel zum Basisträger 9. Nach Öffnen der Deckseite 7 durch Aufschwenken der Klappen 8 können die Träger 9 - manuell oder mit Hilfe nicht weiter dargestellter Antriebe - durch die Öffnung der Deckseite 7 hindurch nach oben ausgeschwenkt werden, siehe Fig. 2 - 4. In ihrer vollständig ausgeschwenkten Stellung nehmen die beiden Träger 19 bevorzugt jeweils einen stumpfen Winkel zum Basisträger 9 ein, insbesondere ca. 120°. Nach dem Ausschwenken der Träger 19 können Teile der Deckseite 7 wieder verschlossen werden, beispielsweise einige der Klappen 8 (Fig. 3, 4).

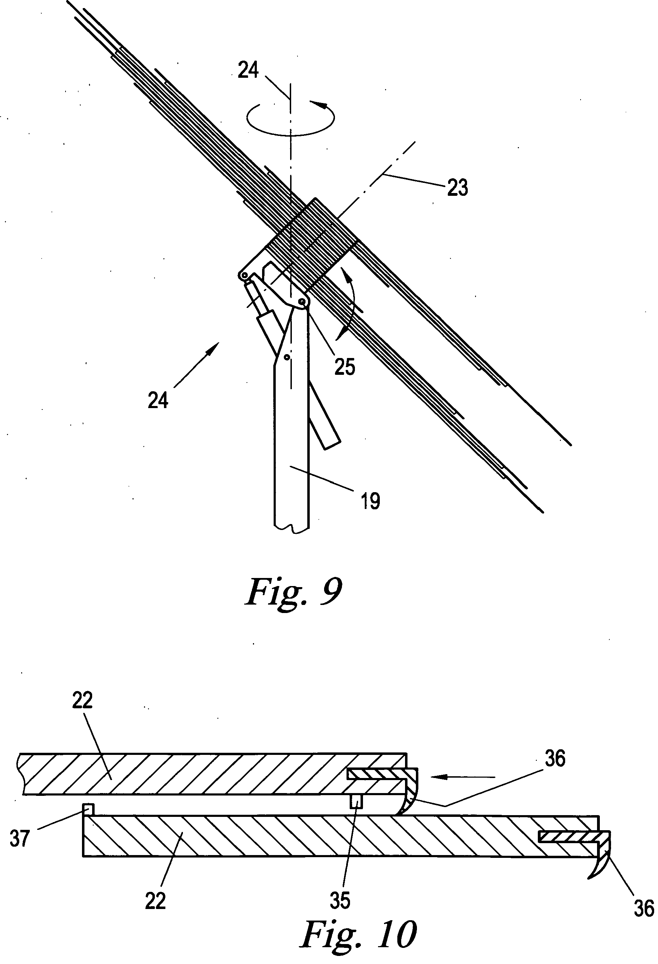

Jeder der beiden Träger 19 trägt an seinem freien Ende 21 eine Vielzahl lamellenförmiger Solarpaneele 22, welche pro Träge 19 um eine gemeinsame Achse 23 verschwenkbar bzw. auffächerbar am Ende 21 gelagert sind. Das Ende 21 kann dazu optional in Form eines Schwenkkopfes 24 (Fig. 9) ausgeführt sein, sodass die Achse 23 um die Längsachse 24 des Trägers 19 gedreht und/oder um eine dazu normale Achse 25 (senkrecht zur Zeichnungsebene in Fig. 9) geschwenkt werden kann.

Da bereits der Basisträger 9 mitsamt den beiden Trägern 19 um die vertikale Achse 6 gedreht werden kann, ist eine individuelle Drehung der Achsen 23 um die Trägerachse 24 nicht zwingend erforderlich. Auch ein Verschwenken der Achsen 23 um die Achsen 25 ist nicht zwingend, jedoch günstig, um eine optimale Ausrichtung der Solarpaneele 22 auf den Sonnenstand zu erzielen. Alternativ oder zusätzlich könnten die Lagerachsen 20 der die beiden Träger 19 um eine in Längsrichtung des Basisträgers 9 verlaufende Achse 26 verschwenkbar sein, beispielsweise mittels Kugel- oder Kardangelenken, falls gewünscht. In einfachen Fällen sind die Träger 19 lediglich um ihre Lagerachsen 20 am Basisträger 9 angelenkt und die Schwenkköpfe 24 entfallen oder sind auf die Schwenkachse 25 reduziert.

Wie aus den Fig. 2 - 4 ersichtlich, können auf diese Weise die Solarpaneele 22 eines Trägers 19 um ihre Achse 23 von einer ersten Stellung (Fig. 2), in welcher sie im wesentlichen deckungsgleich übereinander und parallel zu ihrem Träger 19 liegen, in eine zweite Stellung, in welcher sie um die Achse 23 aufgefächert sind und damit im wesentlichen nebeneinander liegen (Fig. 4), gebracht werden und umgekehrt. Die Solarpaneele 22 besitzen dazu bevorzugt Kreissektorform, sodass sie sich in der aufgefächerten, zweiten Stellung (Fig. 4) zu einer Vollkreisscheibe am Ende 21 jedes Trägers 19 ergänzen.

Vor, gleichzeitig oder nach dem Auffächern der Solarpaneele 22 um ihre Achsen 23 kann der Basisträger 9 um die Achse 6 verdreht werden, wobei sich der obere Gehäuseteil 5 mitdreht, siehe Fig. 4. Durch das Verdrehen des Basisträgers 9 um die Achse 6 können die aufgefächerten Solarpaneele 22 optimal auf den Sonnenstand ausgerichtet werden. Dies kann noch durch ein Verschwenken der Fächerachsen 23 um die Kippachsen 25 und/oder Drehachsen 24 der Schwenkköpfe 24 und/oder die Schwenkachsen 26 der Träger 19 unterstützt werden, falls solche Schwenkmöglichkeiten vorgesehen sind.

Für die geschilderten Bewegungen können entsprechende Antriebe z.B. elektrischer oder hydraulischer Art (nicht gezeigt) vorgesehen werden. Die Antriebe können auch von entsprechenden Sonnenstandssensoren gesteuert werden, um die Solarpaneele 22 in der genannten Art und Weise dem Sonnenstand im Tages- und Jahreszeitenverlauf automatisch nachzuführen.

Jedes Solarpaneel 22 ist bei dem gezeigten Beispiel durch ein flächiges Array von photovoltaischen Solarzellen 28 gebildet. Die elektrischen Anschlüsse bzw. Verschaltungen der Solarzellen 28 und Solarpaneele 22 sind zwecks Übersichtlichkeit nicht gezeigt; beispielsweise werden die Solarpaneele 22 über flexible Anschlusskabel oder Schleifkontakte und starre Kontaktringe an den Schwenkköpfen 24 bzw. Enden 21 kontaktiert und an die weitere Elektrik angeschlossen.

Die Elektrik des Solarmoduls 1 wird bevorzugt im unteren Teil 4 des Gehäuses 2 angeordnet, möglichst nahe dem Boden 11, um den Schwerpunkt des Solarmoduls 1 tief zu halten. Beispielsweise kann der gesamte im unteren Teil 4 des Gehäuses 2 verbleibende Raum zur Anordnung von elektrischen Komponenten und Akkumulatoren 29 ausgenützt werden.

Zur Erhöhung der Stabilität im vollständig ausgefalteten Zustand des Solarmoduls 1 (Fig. 4) kann das Gehäuse 2 mit ausfahrbaren, telesköpierenden oder klappbaren Stützen oder Auslegern 30 zur Vergrößerung seiner wirksamen Standfläche ausgestattet werden.

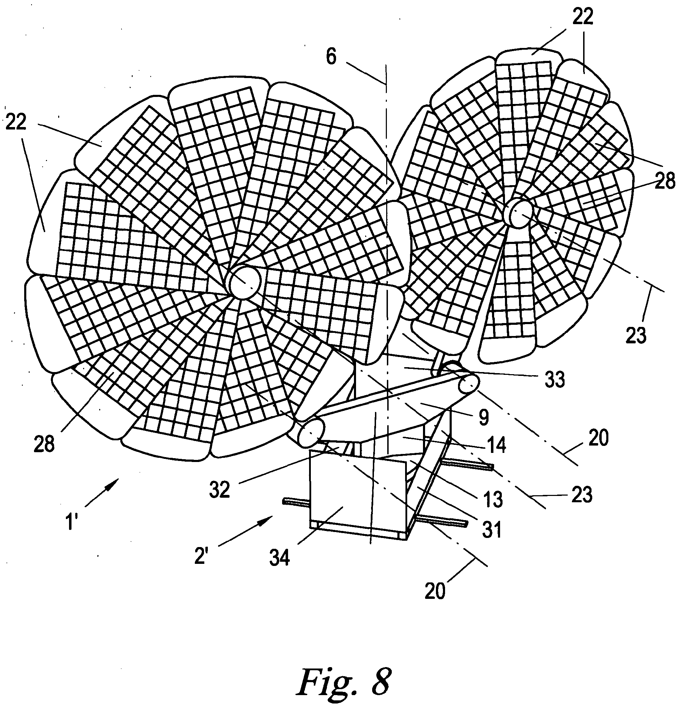

Fig. 8 zeigt eine alternative Ausführungsform 1' des Solarmoduls, wobei gleiche Bezugszeichen gleiche Teile wie in den Fig. 1 - 7 bezeichnen und im weiteren nur auf die Unterschiede gegenüber dem Solarmodul 1 eingegangen wird. Das Solarmodul 1' von Fig. 8 hat ein geringfügig abgewandeltes Gehäuse 2', das nicht zweigeteilt ist, sondern (zumindest teilweise) öffenbare Längsseiten 31, 32 hat, um ein Verdrehen des Basisträgers 9 um seine Achse 6 zu gestatten. Optional können auch die Schmalseiten 33, 34 des Gehäuses 2' (zumindest teilweise) öffenbar sein, doch ist dies nicht zwingend erforderlich. Wie in Fig. 8 gezeigt, genügt das Abnehmen oder Wegklappen der oberen Bereiche der Längsseiten 31, 32, um ein diametrales Ausschwenken des Basisträgers 9 zu ermöglichen.

Für das Auffächern der Solarpaneele 22 um die Achsen 23 genügt es in beiden Varianten (Fig. 1 - 7 und Fig. 8), z.B. nur das jeweils oberste oder unterste Solarpaneel 22 eines Trägers 19 anzutreiben, wenn jedes Solarpaneel 22 das darunter- bzw. darüberliegende Solarpaneel 22 über Schlepphaken oder -leisten 35 mitschleppt (Fig. 10).

Das Übereinandergleiten der Solarpaneele 22 bei dieser Schleppbewegung kann für eine Reinigung der Solarpaneele 22 ausgenützt werden. Zu diesem Zweck ist gemäß Fig. 10 jedes Solarpaneel 22 (mit Ausnahme des untersten Solarpaneels 22) auf seiner Rückseite mit einer Kehrlippe 36 ausgestattet, welche beim Auffächern das jeweils darunterliegende Solarpaneel 22 abkehrt. Die Kehrlippe 36 kann beispielsweise eine Gummi- oder Bürstenlippe sein.

Die Kehrlippe 36 kann gleichzeitig die Schleppleiste 35 bilden. Die Schleppleiste 35 schlägt am Ende ihrer Bewegung über das darunterliegende Solarpaneel 22 an einer Anschlagleiste 37 desselben an.

Für das jeweils oberste Solarpaneel 22 jedes Trägers 19 können im Gehäuse 2, 2' weitere Kehrlippen angeordnet werden, welche das oberste Solarpaneel 22 z.B. beim Aus- und Einschwenken des Trägers 19 aus dem Gehäuse 2, 2' abkehren.

In einer beispielhaften Ausführungsform des Solarmoduls 1, 1' mit einem Gehäuse 2, 2' mit den Abmessungen eines standardisierten 20 Fuß ISO-Containers und einem Gewicht von ca. 20 - 25 Tonnen erreichen die Solarpaneele 22 im vollständig aufgefächertem Zustand (Fig. 4, 8) eine Fläche von ca. 2 x 70 m² und können eine Leistung von bis zu 50 kW erzeugen.

Die Erfindung ist nicht auf die dargestellte Ausführungsform beschränkt, sondern umfasst alle Varianten und Modifikationen, die in den Rahmen der angeschlossenen Ansprüche fallen.

## Patentansprüche

1. Solarmodul, mit zumindest einer Vielzahl von lamellenförmigen Solarpaneelen (22), die um eine gemeinsame Achse (23) verschwenkbar an einem länglichen Träger (19) gelagert und zwischen einer ersten Stellung, in der sie im wesentlichen deckungsgleich und parallel zum Träger (19) übereinanderliegen, und einer zweiten Stellung, in der sie um die genannte Achse (23) aufgefächert im wesentlichen nebeneinanderliegen, bewegbar sind, wobei der Träger (19) aus einem Gehäuse (2, 2'), welches ihn mitsamt den Solarpaneelen (22) in deren erster Stellung aufnimmt, ausschwenkbar ist, **dadurch gekennzeichnet, dass** das Solarmodul (1, 1') zwei in der genannten Weise mit Solarpaneelen (22) ausgestattete Träger (19) der genannten Art aufweist, wobei die beiden Träger (19) an den diametralen Längsenden eines langgestreckten Basisträgers (9) schwenkbar angelenkt sind, welcher in dem Gehäuse (2, 2') um eine etwa vertikale Achse (6) drehbar gelagert ist.

2. Solarmodul nach Anspruch 1, **dadurch gekennzeichnet, dass** jeder Träger (19) in seiner eingeschwenkten Stellung etwa parallel zum Basisträger (9) und in seiner ausgeschwenkten Stellung in einem stumpfen Winkel zum Basisträger (9), bevorzugt etwa 120°, liegt.

3. Solarmodul nach Anspruch 1 oder 2, **dadurch gekennzeichnet, dass** die beiden Träger (19) in der eingeschwenkten Stellung symmetrisch bezüglich der Drehachse (6) des Basisträgers (9) liegen.

4. Solarmodul nach einem der Ansprüche 1 bis 3, **dadurch gekennzeichnet, dass** das Gehäuse (2') die Form einer langgestreckten Schachtel mit einer öffenbaren Deckseite (7) und zumindest mit zwei öffenbaren Längsseiten (31, 32) hat, welche im geöffneten Zustand das Verdrehen des Basisträgers (9) gegenüber dem restlichen Gehäuse (2') gestatten.

5. Solarmodul nach einem der Ansprüche 1 bis 3, **dadurch gekennzeichnet, dass** das Gehäuse (2) die Form einer langgestreckten Schachtel hat und in einen unteren Teil (4) und einen oberen Teil (5) geteilt ist, wobei der untere Teil (4) die Drehlagerung (10) für den Basisträger (9) und der obere Teil (5) den Basisträger (9) aufnimmt, um das gemeinsame Verdrehen des oberen Teils (5) und des Basisträgers (9) gegenüber dem unteren Teil (4) zu gestatten.

6. Solarmodul nach einem der Ansprüche 1 bis 5, **dadurch gekennzeichnet, dass** ein bzw. der untere(r) Teil (4) des Gehäuses (2) zumindest einen elektrischen Akkumulator (29) für von den Solarpaneelen (22) erzeugte Energie enthält.

7. Solarmodul nach einem der Ansprüche 1 bis 6, **dadurch gekennzeichnet, dass** das Gehäuse (2, 2') ein standardisierter Land-, See- oder Luftfracht-Container ist.

8. Solarmodul nach Anspruch 7, **dadurch gekennzeichnet, dass** der Container ein ISO-Container oder EN-Swap-Body ist.

9. Solarmodul nach einem der Ansprüche 1 bis 8, **dadurch gekennzeichnet, dass** zumindest ein Solarpaneel (22) in an sich bekannter Weise auf seiner Rückseite mit einer beim Auffächern auf dem darunterliegenden Solarpaneel (22) abgleitenden Kehrlippe (36) ausgestattet ist.

10. Solarmodul nach einem der Ansprüche 1 bis 9, **dadurch gekennzeichnet, dass** jeder Träger (19) an seinem einen Ende einen Schwenkkopf (24) zur Lagerung seiner Solarpaneele (22) aufweist.

11. Solarmodul nach einem der Ansprüche 1 bis 10, **dadurch gekennzeichnet, dass** der Basisträger (9) und/oder die beiden Träger (19) und/oder die Schwenkköpfe (24), falls solche vorhanden, mit einem sonnenstandgesteuerten Antrieb zur automatischen Sonnennachführung der Solarpaneele (22) ausgestattet ist/sind.

12. Solarmodul nach einem der Ansprüche 1 bis 11, **dadurch gekennzeichnet, dass** jedes Solarpaneel (22) durch ein flächiges Array von photovoltaischen Solarzellen (28) gebildet ist.

## Claims

1. A solar module comprising at least a plurality of lamellar solar panels (22), which are mounted pivotably, about a common axis (23), on an elongate support (19) and can be moved between a first position, in which they are disposed over each other substantially congruently and parallel to the support (19), and a second position, in which they lie substantially next to each other in a fanned out manner about the aforementioned axis (23), wherein the support (19) can be pivoted out of a housing (2, 2') which accommodates the support together with the solar panels (22) in the first position of the panels, **characterized in that** the solar module (1, 1') comprises two supports (19) of the aforementioned type equipped with solar panels (22) in the aforementioned manner, wherein the two supports (19) are pivotably hinged at the diametrical longitudinal ends of an elongate base support (9), which is mounted rotatably, about an approximately vertical axis (6), in the housing (2, 2').

2. The solar module according to claim 1, **characterized in that** each support (19) is located approximately parallel to the base support (9) when in the pivoted-in position, and at an obtuse angle relative to the base support (9), preferably approximately 120°, when in the pivoted-out position.

3. The solar module according to claim 1 or 2, **characterized in that** the two supports (19) are located symmetrically with respect to the rotational axis (6) of the base support (9) in the pivoted-in position.

4. The solar module according to any one of claims 1 to 3, **characterized in that** the housing (2') has the shape of an elongate box having a cover side (7) that can be opened and at least two longitudinal sides (31, 32) that can be opened, which when open permit the base support (9) to be rotated with respect to the remaining housing (2').

5. The solar module according to any one of claims 1 to 3, **characterized in that** the housing (2) has the shape of an elongate box and is divided into a lower part (4) and an upper part (5), wherein the lower part (4) accommodates the pivot mounting (10) for the base support (9) and the upper part (5) accommodates the base support (9), so as to permit the upper part (5) and the base support (9) to be rotated jointly with respect to the lower part (4).

6. The solar module according to any one of claims 1 to 5, **characterized in that** a or the lower part (4) of the housing (2) includes at least one electric accumulator (29) for power generated by the solar panels (22).

7. The solar module according to any one of claims 1 to 6, **characterized in that** the housing (2, 2') is a standardized land, sea, or air freight container.

8. The solar module according to claim 7, **characterized in that** the container is an ISO container or an EN swap body.

9. The solar module according to any one of claims 1 to 8, **characterized in that** at least one solar panel (22) is equipped, in a manner known per se, at the rear with a sweeping lip (36) which slides along the solar panel (22) located beneath during fanning out.

10. The solar module according to any one of claims 1 to 9, **characterized in that** each support (19) comprises a pivot head (24) at its one end for mounting the solar panels (22).

11. The solar module according to any one of claims 1 to 10, **characterized in that** the base support (9) and/or the two supports (19) and/or the pivot heads (24), if such are present, are equipped with a drive controlled as a function of the position of the sun for automatic solar tracking of the solar panels (22).

12. The solar module according to any one of claims 1 to 11, **characterized in that** each solar panel (22) is formed by a planar array of photovoltaic solar cells (28).

## Revendications

1. Module solaire, avec au moins une multiplicité de panneaux solaires (22) en forme de lamelles, qui sont logés sur un support (19) allongé en pouvant être pivotés autour d'un axe (23) commun et qui peuvent être déplacés entre une première position, dans laquelle ils sont couchés les uns sur les autres essentiellement en coïncidant et parallèlement par rapport au support (19), et une deuxième position, dans laquelle ils sont disposés en éventail autour dudit axe (123) essentiellement couchés les uns à côté des autres, où le support (19) peut être déplié hors d'un logement (2, 2'), lequel le reçoit ensemble avec les panneaux solaires (22) dans leur première position, **caractérisé en ce que** le module solaire (1, 1') présente deux supports (19) du type cité équipés avec des panneaux solaires (22) de la manière citée, où les deux supports (19) sont articulés en pouvant pivoter sur les extrémités longitudinales diamétrales d'un support de base (9) allongé, lequel est logé, en pouvant être mis en rotation autour d'un axe (6) qui est à peu près verticalement, dans le logement (2, 2').

2. Module solaire selon la revendication 1, **caractérisé en ce que** chaque support (19) se situe, dans sa position repliée, à peu près parallèlement par rapport au support de base (9) et, dans sa position dépliée, à un angle obtus par rapport au support de base (9), de préférence d'environ 120°.

3. Module solaire selon la revendication 1 ou 2, **caractérisé en ce que** les deux supports (19) se situent de manière symétrique par rapport à l'axe de rotation (6) du support de base (9) dans la position repliée.

4. Module solaire selon l'une des revendications 1 à 3, **caractérisé en ce que** le logement (2') possède la forme d'une boîte allongée avec une face de couverture (7) pouvant s'ouvrir et au moins deux faces longitudinales (31, 32) pouvant s'ouvrir, lesquelles permettent la rotation du support de base (9) par rapport au reste du logement (2') dans l'état ouvert.

5. Module solaire selon l'une des revendications 1 à 3, **caractérisé en ce que** le logement (2) a la forme d'une boîte allongée et est divisé en une partie inférieure (4) et une partie supérieure (5), où la partie inférieure (4) réceptionne le système de rotation (10) pour le support de base (9) et la partie supérieure (5) réceptionne le support de base (9), afin de permettre la rotation commune de la partie supérieure (5) et du support de base (9) par rapport à la partie inférieure (4).

6. Module solaire selon l'une des revendications 1 à 5, **caractérisé en ce qu'**une partie ou la partie inférieure (4) du logement (2), respectivement, contient au moins un accumulateur électrique (29) pour l'énergie générée par les panneaux solaires (22).

7. Module solaire selon l'une des revendications 1 à 6, **caractérisé en ce que** le logement (2, 2') est un conteneur standardisé pour du fret terrestre, maritime ou aérien.

8. Module solaire selon la revendication 7, **caractérisé en ce que** le conteneur est un conteneur de norme ISO ou une caisse mobile de norme EN.

9. Module solaire selon l'une des revendications 1 à 8, **caractérisé en ce qu'**au moins un panneau solaire (22) est équipé d'une manière connue en soi sur son côté arrière avec une lèvre de balayage (36) glissant sur le panneau solaire (22) se situant en dessous pendant le mis en éventail.

10. Module solaire selon l'une des revendications 1 à 9, **caractérisé en ce que** chaque support (19) présente une tête pivotante (24) à une de ses extrémités pour le logement de ses panneaux solaires (22).

11. Module solaire selon l'une des revendications 1 à 10, **caractérisé en ce que** le support de base (9) et/ou les deux supports (19) et/ou les têtes pivotantes (24), dans la mesure où ils sont présents, est/sont équipé/s d'un entraînement à la position du soleil pour le suivi automatique du soleil des panneaux solaires (22).

12. Panneau solaire selon l'une des revendications 1 à 11, **caractérisé en ce que** chaque panneau solaire (22) est formé par un réseau plan de cellules solaires photovoltaïques (28).
